# EUROPÄISCHE PATENTANMELDUNG

(11) **EP 2 335 895 A1**
(43) Veröffentlichungstag der Anmeldung: **22.06.2011**
(21) Anmeldenummer: 10193260.6
(22) Anmeldetag: 01.12.2010
(51) Int. Cl.: B28D 7/02

(54) **Vorrichtung und Verfahren zur Aufbereitung einer Kühl- und Spülflüssigkeit**

(30) Priorität: 18.12.2009 DE 102009054962
(71) Anmelder: HILTI Aktiengesellschaft, 9494 Schaan (LI)
(72) Erfinder: Holzmeier, Georg, 86836, Untermeitingen (DE); Schuster, Marc, 76131, Karlsruhe (DE); Burkhard, Andreas, 86830, Schwabmünchen (DE); Pfeiffer, Ralf, 86899, Landsberg (DE)

(57) **Zusammenfassung**

Vorrichtung (2) zur Aufbereitung einer Kühl- und Spülflüssigkeit aus einer Schmutzflüssigkeit (15) mit einem ersten Behälter (20), der mit einer Zuführleitung (27) für die Schmutzflüssigkeit (15) verbunden ist, einem zweiten Behälter (21), der mit einer Abführleitung (38) für die aufbereitete Kühl- und Spülflüssigkeit (36) verbunden ist, einem Filterelement (30), das in dem zweiten Behälter (21) angeordnet ist, und einer Verbindungsleitung (31), die den ersten und zweiten Behälter (20, 21) verbindet, wobei eine Bypassleitung (41), die die Abführleitung (38) mit der Verbindungsleitung (31) verbindet, vorgesehen ist.

## Beschreibung

Die vorliegende Erfindung betrifft eine Vorrichtung zur Aufbereitung einer Kühl- und Spülflüssigkeit gemäß dem Oberbegriff des Anspruchs 1 sowie ein Verfahren zur Aufbereitung einer Kühl- und Spülflüssigkeit gemäß dem Oberbegriff des Anspruchs 11.

Bei der abrasiv abtragenden Bearbeitung mit Diamantwerkzeugen, beispielsweise in Form von Diamantbohrkronen oder Diamantsägen, ist es erforderlich, das Diamantwerkzeug im Bereich der Bearbeitungsstelle zu kühlen, um eine Beschädigung des Diamantwerkzeuges durch eine Überhitzung zu vermeiden. Die Schneidsegmente der Diamantwerkzeuge werden während des Bearbeitungsvorgangs mittels einer Kühlflüssigkeit gekühlt, um den Bearbeitungsvorgang zu unterstützen und die Lebensdauer der Schneidsegmente zu erhöhen. Die Flüssigkeit dient außerdem dazu, die von dem Diamantwerkzeug abgetragenen Feststoffe von der Bearbeitungsstelle zu entfernen. Die zugeführte Flüssigkeit wird als Kühl- und Spülflüssigkeit und die mit Feststoffen versetzte Flüssigkeit als Schmutzflüssigkeit bezeichnet.

EP 0 941 828 B1 offenbart eine bekannte Aufbereitungsvorrichtung zum Aufbereiten einer Kühl- und Spülflüssigkeit aus einer Schmutzflüssigkeit und zum Zuführen der recycelten Kühl- und Spülflüssigkeit zu einem Werkzeuggerät, beispielsweise einem Kernbohrgerät. Die Aufbereitungsvorrichtung umfasst zwei luft- und flüssigkeitsdicht abgeschlossene Behälter. Im Betrieb sind der erste Behälter mittels einer Unterdruckeinrichtung als Unterdruckbehälter und der zweite Behälter mittels einer Überdruckeinrichtung als Überdruckbehälter ausgebildet. Der Unterdruckbehälter ist über eine Verbindungsleitung mit dem Überdruckbehälter verbunden. Mit Hilfe der Unterdruckeinrichtung wird die Schmutzflüssigkeit über eine Zuführleitung in den Unterdruckbehälter gesaugt, der außerdem zur Vorreinigung der Schmutzflüssigkeit dient. Die Überdruckeinrichtung, die in der Verbindungsleitung angeordnet ist, befördert die vorgereinigte Schmutzflüssigkeit aus dem Unterdruckbehälter über die Verbindungsleitung in den Überdruckbehälter. Am Deckel des Überdruckbehälters befindet sich ein Filterelement, das mit einer Außenseite mit der vorgereinigten Schmutzflüssigkeit in Kontakt steht. Aufgrund des Überdrucks strömt die vorgereinigte Schmutzflüssigkeit in das Innere des Filterelementes. In der vorgereinigten Schmutzflüssigkeit vorhandene Feststoffe bleiben im Filterelement hängen. Im Inneren des Filterelementes sammelt sich recycelte Kühl- und Spülflüssigkeit, die dem Werkzeuggerät zugeführt werden kann. Die recycelte Kühl- und Spülflüssigkeit strömt aufgrund des Überdruckes über eine Versorgungsleitung zum Werkzeuggerät.

Die Zuführleitung, die Verbindungsleitung und die Überdruckeinrichtung werden von der Schmutzflüssigkeit bzw. der vorgereinigten Schmutzflüssigkeit durchströmt. Sowohl die Schmutzflüssigkeit als auch die vorgereinigte Schmutzflüssigkeit enthalten Feststoffe, die die Leitungen und die Überdruckeinrichtung verstopfen können. Um die Funktionsfähigkeit der Aufbereitungsvorrichtung sicherzustellen und eine ausreichend Menge an Kühl- und Spülflüssigkeit zur Verfügung zu stellen, ist es erforderlich, die Leitungen und die Überdruckeinrichtung regelmäßig zu reinigen und die Feststoffe zu entfernen.

Die Bedienung der bekannten Aufbereitungsvorrichtung sieht vor, dass vor jeder längeren Arbeitspause und nach Beendigung eines Arbeitstages die Behälter zu reinigen sind und das Filterelement zu regenerieren ist. Die bekannte Aufbereitungsvorrichtung weist den Nachteil auf, dass die Zuführleitung, die Verbindungsleitung und die Überdruckeinrichtung manuell durch den Bediener zu reinigen sind und kein automatischer Reinigungsbetrieb vorhanden ist.

Die Aufgabe der vorliegenden Erfindung besteht demgegenüber darin, eine Vorrichtung und ein Verfahren zur Aufbereitung einer Kühl- und Spülflüssigkeit der eingangs genannten Art dahingehend weiterzuentwickeln, dass die Funktionsfähigkeit der Aufbereitungsvorrichtung verbessert ist und die Gefahr, dass die Aufbereitungsvorrichtung verstopft, reduziert ist.

Diese Aufgabe wird bei der eingangs genannten Aufbereitungsvorrichtung erfindungsgemäß durch die Merkmale des unabhängigen Anspruchs gelöst. Vorteilhafte Ausgestaltungen ergeben sich aus den abhängigen Ansprüchen.

Es wird eine Vorrichtung zur Aufbereitung einer Kühl- und Spülflüssigkeit aus einer Schmutzflüssigkeit mit einem ersten Behälter, der mit einer Zuführleitung für die Schmutzflüssigkeit verbunden ist, einem zweiten Behälter, der mit einer Abführleitung für die aufbereitete Kühl- und Spülflüssigkeit verbunden ist, einem Filterelement, das in dem zweiten Behälter angeordnet ist, und einer Verbindungsleitung, die den ersten und zweiten Behälter verbindet,

Erfindungsgemäß ist eine Bypassleitung, die die Abführleitung mit der Verbindungsleitung verbindet, vorgesehen. Dabei weist die Bypassleitung bevorzugt ein Steuerventil auf, wobei das Steuerventil mittels einer Steuereinrichtung zwischen einem offenen Zustand, in dem das Steuerventil durchströmbar, und einem geschlossenen Zustand, in dem das Steuerventil nicht durchströmbar ist, verstellbar ist.

In einer bevorzugten Ausführung ist in der Abführleitung ein Steuerventil vorgesehen, das mittels einer Steuereinrichtung zwischen einem offenen Zustand, in dem das Steuerventil durchströmbar, und einem geschlossenen Zustand, in dem das Steuerventil nicht durchströmbar ist, verstellbar ist, wobei das Steuerventil in einer Strömungsrichtung hinter der Bypassleitung angeordnet ist. Mit Hilfe des Steuerventils kann die Zufuhr der Kühl- und Spülflüssigkeit zum Kernbohrgerät unterbrochen werden, so dass die Kühl- und Spülflüssigkeit zur Reinigung verwendet werden kann.

In einer weiteren bevorzugten Ausführung wirkt der zweite Behälter mit einer Überdruckeinrichtung, die in der Verbindungsleitung angeordnet ist, zusammen und die Bypassleitung mündet in einer Strömungsrichtung vor der Überdruckeinrichtung in die Verbindungsleitung. Durch diese Anordnung ist sichergestellt, dass die Überdruckeinrichtung gereinigt wird.

In einer weiteren bevorzugten Ausführung ist eine weitere Bypassleitung, die die Verbindungsleitung mit der Zuführleitung verbindet, vorgesehen. Dabei weist die weitere Bypassleitung besonders bevorzugt ein Steuerventil auf, wobei das Steuerventil mittels einer Steuereinrichtung zwischen einem offenen Zustand, in dem das Steuerventil durchströmbar, und einem geschlossenen Zustand, in dem das Steuerventil nicht durchströmbar ist, verstellbar ist.

In einer weiteren bevorzugten Ausführung ist das Filterelement in einer Strömungsrichtung vor dem zweiten Behälter angeordnet ist. Diese Ausführung hat den Vorteil, dass sich die vom Filterelement herausgefilterten Feststoffe im Inneren des Filterelementes befinden.

In einer alternativen bevorzugten Ausführung ist das Filterelement in einer Strömungsrichtung hinter dem zweiten Behälter angeordnet.

Bevorzugt sind in der Abführleitung ein Druckschalter zur Druckmessung und/oder ein Membrandruckspeicher vorgesehen. Der Druckschalter ermöglicht es, die im Membrandruckspeicher gespeicherte Kühl- und Spülflüssigkeit bei Überschreiten eines Druckwertes automatisch mittels einer Steuereinrichtung frei zugeben. Die im Membrandruckspeicher gespeicherte Kühl- und Spülflüssigkeit eignet sich besonders gut zur Reinigung des Filterelementes.

Außerdem wird ein Verfahren zur Aufbereitung einer Kühl- und Spülflüssigkeit in einer Aufbereitungsvorrichtung vorgeschlagen, bei dem ein Steuerventil bei aktiver Überdruckeinrichtung geschlossen und eine Bypassleitung über das Steuerventil für ein Zeitintervall geöffnet wird. Das Steuerventil in der Abführleitung unterbricht die Zufuhr der Kühl- und Spülflüssigkeit zum Kernbohrgerät. Die Kühl- und Spülflüssigkeit wird über die geöffnete Bypassleitung in die Verbindungsleitung umgeleitet. Auf diese Weise werden die Verbindungsleitung und die Überdruckeinrichtung, die in der Verbindungsleitung angeordnet ist, mit Hilfe der Kühl- und Spülflüssigkeit gereinigt.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: ein Kernbohrgerät mit einer ersten Ausführungsform einer erfindungsgemäßen Aufbereitungsvorrichtung zur Aufbereitung einer Kühl- und Spülflüssigkeit; und
- Fig. 2: das Kernbohrgerät der Fig. 1 mit einer zweiten Ausführungsform einer erfindungsgemäßen Aufbereitungsvorrichtung zur Aufbereitung einer Kühl- und Spülflüssigkeit.

Gleiche oder funktionsgleiche Elemente werden durch gleiche Bezugszeichen in den Figuren indiziert, soweit nicht anders angegeben.

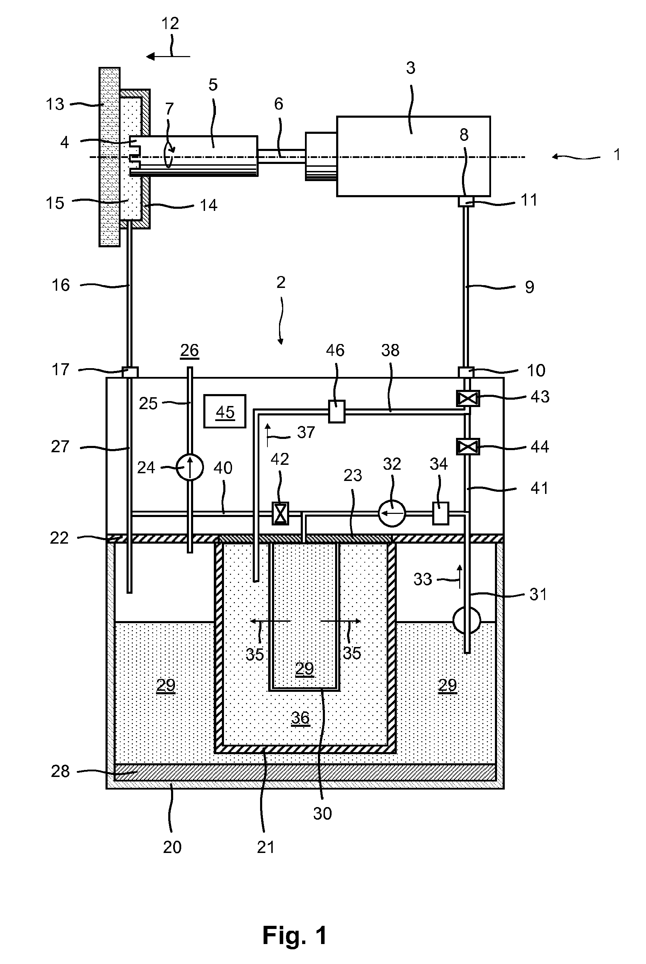

Das in **Fig. 1** gezeigte Werkzeuggerät ist als Kernbohrgerät **1** ausgebildet und mit einer erfindungsgemäßen Aufbereitungsvorrichtung **2** zur Aufbereitung einer Kühl- und Spülflüssigkeit verbunden.

Das Kernbohrgerät 1 umfasst eine Maschineneinheit **3**, die eine mit Schneidsegmenten **4** besetzte Bohrkrone **5** um eine Drehachse **6** in eine Drehrichtung **7** antreibt. Die Kühl- und Spülflüssigkeit wird über eine Einlassöffnung **8** der Maschineneinheit 3 zugeführt. Die Einlassöffnung 8 ist über eine Versorgungsleitung **9** mit einem Ausgangsstutzen **10** der Aufbereitungsvorrichtung 2 verbunden. Alternativ kann die Kühl- und Spülflüssigkeit einem Saug- bzw. Spülkopf zugeführt werden, der in Strömungsrichtung hinter der Maschineneinheit 3 angeordnet ist.

Über eine Reguliereinrichtung **11**, die mit der Einlassöffnung 8 der Maschineneinheit 3 verbunden ist und die von einem Bediener manuell bedient wird, ist der Durchfluss der Kühl- und Spülflüssigkeit in die Maschineneinheit 3 einstellbar. Dabei ist die Reguliereinrichtung 11 als Absperreinrichtung ausgebildet und zwischen einer offenen Stellung, in der die Kühl- und Spülflüssigkeit in die Maschineneinheit 3 strömen kann, und einer geschlossenen Stellung, in der der Zufluss der Kühl- und Spülflüssigkeit zur Maschineneinheit 3 unterbrochen ist, verstellbar. Alternativ kann die Reguliereinrichtung 11 eine diskrete oder kontinuierliche Einstellung des Durchflusses der Kühl- und Spülflüssigkeit zwischen 0 % (geschlossene Stellung) und 100 % (offene Stellung) ermöglichen.

Im Bohrbetrieb, d.h. während die Bohrkrone 5 um die Drehachse 6 angetrieben wird und die Schneidsegmente 4 in einer Bohrrichtung **12** in einen zu bearbeitenden Untergrund **13** eindringen, wird die Bohrkrone 5 mittels der Kühl- und Spülflüssigkeit gespült und im Bereich der Bearbeitungsstelle gekühlt. Auf dem zu bearbeitenden Untergrund 13 ist eine Auffangeinrichtung **14** angeordnet, die die Bearbeitungsstelle umgibt und eine erwärmte und mit Feststoffen versetzte Kühl- und Spülflüssigkeit, die als Schmutzflüssigkeit **15** bezeichnet wird, auffängt. Die Auffangeinrichtung 14 ist über eine Absaugleitung **16** an einen Eingangsstutzen **17** der Aufbereitungsvorrichtung 2 angeschlossen.

Die Aufbereitungsvorrichtung 2 umfasst einen ersten und zweiten Behälter **20**, **21**. Um die Aufbereitungsvorrichtung 2 kompakt auszubilden, ist der zweite Behälter 21 im ersten Behälter 20 angeordnet und beide Behälter 20, 21 sind jeweils über einen Deckel **22**, **23** luft- und flüssigkeitsdicht abgeschlossen. Alternativ können die beiden Behälter 20, 21 nebeneinander angeordnet sein.

Der erste Behälter 20 wirkt im Bohrbetrieb mit einer Absaugeinrichtung **24**, die die Schmutzflüssigkeit 15 aus der Auffangeinrichtung 14 in den ersten Behälter 20 befördert, zusammen. Die Absaugeinrichtung 24 ist beispielsweise als Einrichtung zur Erzeugung eines Unterdrucks, die im Folgenden als Unterdruckeinrichtung bezeichnet wird, ausgebildet und der erste Behälter 20 wird auch als Unterdruckbehälter bezeichnet. Die Unterdruckeinrichtung 24 ist in einer Saugleitung **25** angeordnet, die mit einem Ende in den Unterdruckbehälter 20 mündet und mit einem anderen Ende an eine Atmosphäre **26** angeschlossen ist. Durch den Unterdruck, der im Unterdruckbehälter 20 gegenüber der Auffangeinrichtung 14 herrscht, wird die Schmutzflüssigkeit 15 über die Absaugleitung 16 und eine Zuführleitung **27**, die mit einem Ende an den Eingangsstutzen 17 der Aufbereitungsvorrichtung 2 angeschlossen ist und mit einem anderen Ende in den Unterdruckbehälter 20 mündet, in den Unterdruckbehälter 20 befördert.

Der Unterdruckbehälter 20 dient zusätzlich zur Vorreinigung der Schmutzflüssigkeit 15. Durch die Schwerkraft setzen sich Feststoffe, die durch das abgetragene Material des Untergrundes 13 in der Schmutzflüssigkeit 15 vorhanden sind, am Boden des Unterdruckbehälters 20 als abgesetzte Feststoffe **28** ab. Oberhalb der abgesetzten Feststoffe 28 befindet sich eine vorgereinigte Schmutzflüssigkeit **29**.

Im zweiten Behälter 21 ist ein Filterelement **30** angeordnet, das über eine Verbindungsleitung **31** mit dem Unterdruckbehälter 20 verbunden ist. Damit die durch die Schwerkraft bereits abgesetzten Feststoffe 28 nicht in das Filterelement 30 gelangen, ist der in den Unterdruckbehälter 20 ragende Teil der Verbindungsleitung 31 als vom Boden des Unterdruckbehälters 20 beabstandete Steigleitung ausgebildet. In der Verbindungsleitung 31 ist eine Einrichtung zur Erzeugung eines Überdruckes **32**, die im Folgenden als Überdruckeinrichtung bezeichnet wird und beispielsweise als Druckpumpe ausgebildet ist, angeordnet. Die Überdruckeinrichtung 32 erzeugt beispielsweise einen Überdruck, der zwischen 1 und 6 bar beträgt. Der zweite Behälter 21 wird auch als Überdruckbehälter bezeichnet.

Durch den Überdruck strömt die vorgereinigte Schmutzflüssigkeit 29 über die Verbindungsleitung 31 aus dem Unterdruckbehälter 20 in das Filterelement 30. In der Verbindungsleitung 31 befindet sich in einer Strömungsrichtung **33** vor der Überdruckeinrichtung 32 ein Rückschlagventil **34**, das verhindert, dass die vorgereinigte Schmutzflüssigkeit 29 in den Unterdruckbehälter 20 zurückströmt.

Aufgrund des Überdruckes in dem Filterelement 30 strömt die vorgereinigte Schmutzflüssigkeit 29 durch das Filterelement 30 in einer Strömungsrichtung **35** in den Überdruckbehälter 21. Feststoffe, die in der vorgereinigten Schmutzflüssigkeit 29 enthalten sind, lagern sich aufgrund der Schwerkraft am Boden des Filterelementes 30 ab oder bleiben im Filterelement 30 hängen. Im Überdruckbehälter 21 sammelt sich recycelte Kühl- und Spülflüssigkeit **36** , die dem Kernbohrgerät 1 zugeführt werden kann, so dass der Kreislauf geschlossen ist. Die recycelte Kühl- und Spülflüssigkeit 36 strömt aufgrund der Druckdifferenz in einer Strömungsrichtung **37** über eine Abführleitung **38**, die mit einem Ende in den Überdruckbehälter 21 mündet und mit einem anderen Ende an den Ausgangsstutzen 10 der Aufbereitungsvorrichtung 2 angeschlossen ist, und die Versorgungsleitung 9 in das Kernbohrgerät 1.

Die Zuführleitung 27, die Verbindungsleitung 31, die erste Bypassleitung 40, das erste Steuerventil 42 und die Überdruckeinrichtung 32 werden von der Schmutzflüssigkeit 15 oder der vorgereinigten Schmutzflüssigkeit 29 durchströmt. Da die Schmutzflüssigkeit 15 und die vorgereinigte Schmutzflüssigkeit 29 Feststoffe, die die Leitungen, das erste Steuerventil 42 und die Überdruckeinrichtung 42 verstopfen können, enthalten, ist eine regelmäßige Reinigung der Leitungen 27, 31, 40, des ersten Steuerventils 42 und der Überdruckeinrichtung 32 erforderlich. Die Reinigung der Zuführ- und Verbindungsleitungen 27, 31, 40, des erste Steuerventils 42 und der Überdruckeinrichtung 32 erfolgt über eine Strömungsumleitung der recycelten Kühl- und Spülflüssigkeit 36 und der vorgereinigten Schmutzflüssigkeit 29 in einem Reinigungsbetrieb der Aufbereitungsvorrichtung 2.

Die erfindungsgemäße Aufbereitungsvorrichtung 2 weist eine erste Bypassleitung **40** und eine zweite Bypassleitung **41** auf. Die erste Bypassleitung 40 stellt eine Verbindung zwischen der Verbindungsleitung 31 und der Zuführleitung 27 her und zweigt, in Strömungsrichtung 33 betrachtet, hinter der Überdruckeinrichtung 32 aus der Verbindungsleitung 31 ab. Die Mündung der ersten Bypassleitung 40 in die Zuführleitung 27 erfolgt direkt hinter dem Eingangsstutzen 17 der Aufbereitungsvorrichtung 2, damit die Zuführleitung 27 vollständig gespült wird. Die zweite Bypassleitung 41 stellt eine Verbindung zwischen der Abführleitung 38 und der Verbindungsleitung 31 her und zweigt, in Strömungsrichtung 37 betrachtet, vor dem Ausgangsstutzen 10 aus der Abführleitung 38 ab und, in Strömungsrichtung 31 betrachtet, vor der Überdruckeinrichtung 32 und dem Rückschlagventil 34 in die Verbindungsleitung 31.

Zur Strömungsumleitung der recycelten Kühl- und Spülflüssigkeit 36 und der vorgereinigten Schmutzflüssigkeit 29 über die erste und zweite Bypassleitung 40, 41 sind drei Steuerventile **42**, **43**, **44** vorgesehen, die mittels einer Steuereinrichtung **45** zwischen einem offenen Zustand und einem geschlossenen Zustand verstellbar sind. Die erste Bypassleitung 40 ist über das erste Steuerventil 42, das auch als Abreinigungsventil bezeichnet wird, verschließbar. Das erste Steuerventil 42 befindet sich am Eingang der ersten Bypassleitung 40. Über das zweite Steuerventil 43, das sich in Strömungsrichtung 37 betrachtet hinter der zweiten Bypassleitung 41 befindet, ist die Zufuhr der recycelten Kühl- und Spülflüssigkeit 36 in die Versorgungsleitung 9 und das Kernbohrgerät 1 einstellbar. Das dritte Steuerventil 44 ist in der zweiten Bypassleitung 41 angeordnet und sorgt dafür, dass die zweite Bypassleitung 41 verschließbar ist. Zur Überwachung des Druckes, den die Überdruckeinrichtung 32 erzeugt, ist in der Abführleitung 38 ein Druckschalter **46** angeordnet, der mit der Steuereinrichtung 45 verbunden ist.

Die Aufbereitungsvorrichtung 2 weist zwei verschiedene Betriebszustände, einen Bohrbetrieb und einen Reinigungsbetrieb, auf. Im Bohrbetrieb führt die Aufbereitungsvorrichtung 2 die recycelte Kühl- und Spülflüssigkeit 36 dem Kernbohrgerät 1 zu und saugt die Schmutzflüssigkeit 15 aus der Auffangeinrichtung 14 ab. Die erste und zweite Bypassleitung 40, 41 sind im Bohrbetrieb über das erste und dritte Steuerventil 42, 44, die sich beide im geschlossenen Zustand befinden, verschlossen. Das zweite Steuerventil 43 befindet sich im offenen Zustand, so dass die recycelte Kühl- und Spülflüssigkeit 36 über das zweite Steuerventil 43 in die Versorgungsleitung 9 strömen kann.

Der Reinigungsbetrieb der Aufbereitungsvorrichtung 2 erfolgt automatisch in voreinstellbaren Zeitintervallen oder abhängig von bestimmten Randbedingungen, beispielsweise wenn sich die Aufbereitungsvorrichtung 2 in einem Stand-by-Modus befindet. Die Reinigung der Zuführleitung 27, der ersten Bypassleitung 40, des ersten Steuerventils 42 sowie der Verbindungsleitung 31 und der Überdruckeinrichtung 32 erfolgt in mehreren Stufen.

In einer ersten Stufe erfolgt eine grobe Vorspülung des ersten Steuerventils 42 sowie der ersten Bypassleitung 40 und der Zuführleitung 27. Die Steuereinrichtung 45 schließt das zweite Steuerventil 43 in der Abführleitung 38 und unterbricht damit die Zufuhr der recycelten Kühl- und Spülflüssigkeit 36 von der Aufbereitungsvorrichtung 2 zum Kernbohrgerät 1.

Der Druckschalter 46 misst den Druck in der Abführleitung 38 und gibt der Steuereinrichtung 45 bei Überschreiten eines voreingestellten Druckwertes einen Schaltimpuls. Alternativ kann der Schaltimpuls nach Ablauf eines voreingestellten Zeitintervalls erfolgen. Die Steuereinrichtung 45 öffnet das erste Steuerventil 42 in der ersten Bypassleitung 40 für ein kurzes Zeitintervall. In diesem Zeitintervall strömt die vorgereinigte Schmutzflüssigkeit 29 aus der Verbindungsleitung 31 in die erste Bypassleitung 40, und von dort in die Zuführleitung 27 und anschließend in den Unterdruckbehälter 20. Nach Ablauf des Zeitintervalls schließt die Steuereinrichtung 45 das erste Steuerventil 42.

In einer zweiten Stufe des Spülprogramms wird die Überdruckeinrichtung 32 und die Verbindungsleitung 30 mit recycelter Kühl- und Spülflüssigkeit gereinigt. Die Steuereinrichtung 45 öffnet das dritte Steuerventil 44 bei aktiver Überdruckeinrichtung 32. Das erste und zweite Steuerventil 42, 43 befinden sich in einem geschlossenen Zustand. Die recycelte Kühl- und Spülflüssigkeit 36 strömt in der Strömungsrichtung 37 über die Abführleitung 38 in die zweite Bypassleitung 41 und von dort entgegen der Strömungsrichtung 33 wieder durch die Überdruckeinrichtung 32 in den zweiten Behälter 21. Hier schließt sich der Kreislauf über das Filterelement 30 und die Abführleitung 38.

In einer dritten Spülstufe erfolgt die Reinigung des ersten Steuerventils 42 mit recycelter Kühl- und Spülflüssigkeit 36. Die Steuereinrichtung 45 öffnet das erste Steuerventil 42 in der ersten Bypassleitung 40 für ein kurzes Zeitintervall. In diesem Zeitintervall strömt die recycelte Kühl- und Spülflüssigkeit 36 aus der Verbindungsleitung 31 in die erste Bypassleitung 40, und von dort in die Zuführleitung 27 und anschließend in den Unterdruckbehälter 20. Nach Ablauf des kurzen Zeitintervalls schließt die Steuereinrichtung 45 das erste Steuerventil 42. Danach wird der Druck über die Überdruckeinrichtung 32 für ein bestimmtes Zeitintervall aufgebaut und das erste Steuerventil 42 sehr kurz geöffnet. Dieser Vorgang wird einige Male wiederholt, bis das erste Steuerventil 42 ausreichend mit recycelter Kühl- und Spülflüssigkeit 36 gespült wurde.

Am Ende der dritten Spülstufe wird die Überdruckeinrichtung 32 ausgeschaltet. Die in der Abführungsleitung 38 und der zweiten Bypassleitung 41 verbliebene recycelte Kühl- und Spülflüssigkeit 36 strömt über die Verbindungsleitung 31 in den Unterdruckbehälter 20 zurück und spült dabei die Verbindungsleitung.

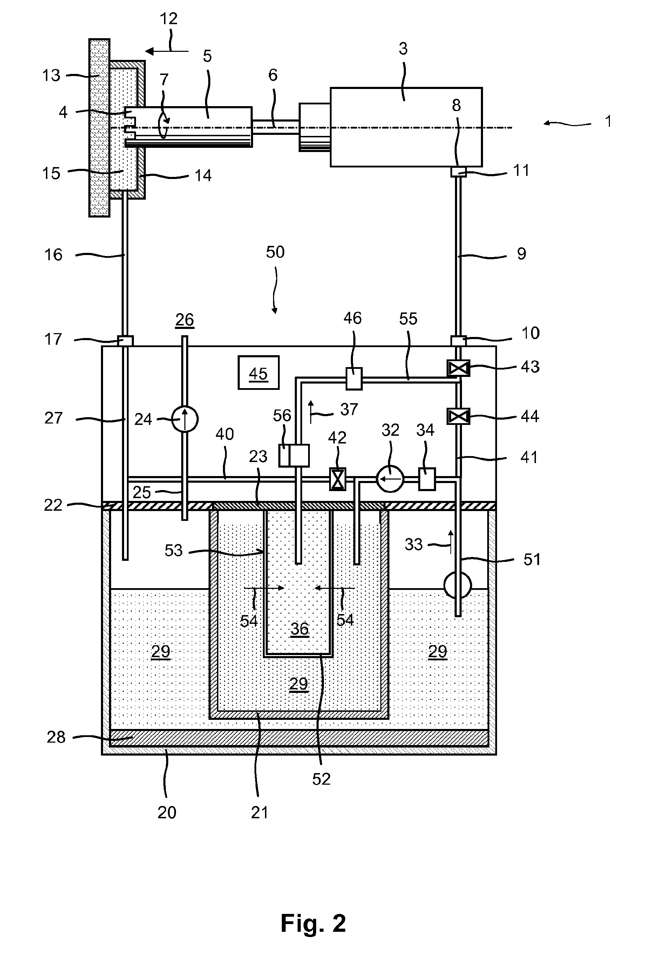

**Fig. 2** zeigt das Kernbohrgerät der Fig. 1 mit einer zweiten Ausführungsform einer erfindungsgemäßen Aufbereitungsvorrichtung **50** zur Aufbereitung einer Kühl- und Spülflüssigkeit.

Die Aufbereitungsvorrichtung 50 unterscheidet sich von der in Fig. 1 gezeigten Aufbereitungsvorrichtung 2 dadurch, dass das Filterelement in Strömungsrichtung betrachtet im Bohrbetrieb hinter dem Überdruckbehälter 21 angeordnet ist. Die Schmutzflüssigkeit 15 wird mit Hilfe der Unterdruckeinrichtung 24 in den Unterdruckbehälter 20 befördert, der eine Vorreinigung der Schmutzflüssigkeit 15 durchführt.

Der Unterdruckbehälter 20 ist über eine Verbindungsleitung **51** mit dem Überdruckbehälter 21 verbunden. Damit die durch die Schwerkraft bereits abgesetzten Feststoffe 28 nicht in den Überdruckbehälter 21 gelangen, ist der in den Unterdruckbehälter 20 ragende Teil der Verbindungsleitung 51 als vom Boden des Unterdruckbehälters 20 beabstandete Steigleitung ausgebildet. In der Verbindungsleitung 51 ist ebenfalls eine Überdruckeinrichtung 32 angeordnet.

Im Überdruckbehälter 21 ist ein Filterelement **52** angeordnet, das mit einer Außenfläche **53** mit der vorgereinigten Schmutzflüssigkeit 29 in Kontakt steht. Aufgrund des im Überdruckbehälter 21 herrschenden Überdrucks strömt die vorgereinigte Schmutzflüssigkeit 29 durch die Außenfläche 53 entlang einer Strömungsrichtung **54** in das Innere des Filterelementes 52. In der vorgereinigten Schmutzflüssigkeit 29 vorhandene Feststoffe bleiben am Filterelement 52 hängen. Im Inneren des Filterelementes 52 sammelt sich die recycelte Kühl- und Spülflüssigkeit 36, die dem Kernbohrgerät 2 zugeführt werden kann. Das Filterelement 52 ist über eine Abführleitung **55** mit dem Ausgangsstutzen 10 der Aufbereitungsvorrichtung 50 verbunden. Die recycelte Kühl- und Spülflüssigkeit 36 strömt über die Abführleitung 55 und die Versorgungsleitung 9 in die Maschineneinheit 3.

In der Abführleitung 55 ist außerdem ein Membrandruckspeicher **56** vorgesehen. Der Membrandruckspeicher 56 besteht aus einer ersten Kammer, die über eine Membran von einer zweiten Kammer getrennt ist. Die erste und zweite Kammer sind mit verschiedenen Medien gefüllt. In der ersten Kammer befindet sich Luft, die unter Einwirkung von Druck kompressibel ist. Die zweite Kammer ist mit Kühl- und Spülflüssigkeit, die unter Einwirkung von Druck nicht kompressibel ist, gefüllt. Die Leistung des Membrandruckspeichers ist so gewählt, dass der Membrandruckspeicher eine ausreichende Menge an Kühl- und Spülflüssigkeit 36 speichern kann, die ausreicht, das Filterelement 52 zu reinigen und das Spülprogramm zu unterstützen.

Die Reinigung der Zuführleitung 27, der Verbindungsleitung 51 und der Überdruckeinrichtung 32, der ersten Bypassleitung 40 und des ersten Steuerventils 42 der Aufbereitungsvorrichtung 50 erfolgt analog zur Reinigung der Aufbereitungsvorrichtung 2 mit Hilfe der Bypassleitungen 40, 41 und der Steuerventile 42, 43, 44.

## Patentansprüche

1. Vorrichtung (2; 50) zur Aufbereitung einer Kühl- und Spülflüssigkeit aus einer Schmutzflüssigkeit (15) mit einem ersten Behälter (20), der mit einer Zuführleitung (27) für die Schmutzflüssigkeit (15) verbunden ist, einem zweiten Behälter (21), der mit einer Abführleitung (38; 55) für die aufbereitete Kühl- und Spülflüssigkeit (36) verbunden ist, einem Filterelement (30; 52), das in dem zweiten Behälter (21) angeordnet ist, und einer Verbindungsleitung (31; 51), die den ersten und zweiten Behälter (20, 21) verbindet, **dadurch gekennzeichnet, dass** eine Bypassleitung (41), die die Abführleitung (38; 55) mit der Verbindungsleitung (31; 51) verbindet, vorgesehen ist.

2. Aufbereitungsvorrichtung nach Anspruch 1, **dadurch gekennzeichnet, dass** die Bypassleitung (41) ein Steuerventil (44) aufweist, wobei das Steuerventil (44) mittels einer Steuereinrichtung (45) zwischen einem offenen Zustand, in dem das Steuerventil (44) durchströmbar, und einem geschlossenen Zustand, in dem das Steuerventil (44) nicht durchströmbar ist, verstellbar ist.

3. Aufbereitungsvorrichtung nach einem der vorhergehenden Ansprüche, **dadurch gekennzeichnet, dass** in der Abführleitung (38; 55) ein Steuerventil (43) vorgesehen ist, das mittels einer Steuereinrichtung (45) zwischen einem offenen Zustand, in dem das Steuerventil (43) durchströmbar, und einem geschlossenen Zustand, in dem das Steuerventil (43) nicht durchströmbar ist, verstellbar ist, wobei das Steuerventil (43) in einer Strömungsrichtung (37) hinter der Bypassleitung (41) angeordnet ist.

4. Aufbereitungsvorrichtung nach einem der vorhergehenden Ansprüche, **dadurch gekennzeichnet, dass** der zweite Behälter (21) mit einer Überdruckeinrichtung (32), die in der Verbindungsleitung (31; 51) angeordnet ist, zusammenwirkt und die Bypassleitung (41) in einer Strömungsrichtung (33) vor der Überdruckeinrichtung (32) in die Verbindungsleitung (31; 51) mündet.

5. Aufbereitungsvorrichtung nach einem der vorhergehenden Ansprüche, **dadurch gekennzeichnet, dass** eine weitere Bypassleitung (40), die die Verbindungsleitung (31; 51) mit der Zuführleitung (27) verbindet, vorgesehen ist.

6. Aufbereitungsvorrichtung nach Anspruch 5, **dadurch gekennzeichnet, dass** die weitere Bypassleitung (40) ein Steuerventil (42) aufweist, wobei das Steuerventil (42) mittels einer Steuereinrichtung (45) zwischen einem offenen Zustand, in dem das Steuerventil (42) durchströmbar, und einem geschlossenen Zustand, in dem das Steuerventil (42) nicht durchströmbar ist, verstellbar ist.

7. Aufbereitungsvorrichtung nach einem der Ansprüche 1 bis 6, **dadurch gekennzeichnet, dass** das Filterelement (30) in einer Strömungsrichtung (35) vor dem zweiten Behälter (21) angeordnet ist.

8. Aufbereitungsvorrichtung nach einem der Ansprüche 1 bis 6, **dadurch gekennzeichnet, dass** das Filterelement (52) in einer Strömungsrichtung (54) hinter dem zweiten Behälter (21) angeordnet ist.

9. Aufbereitungsvorrichtung nach einem der vorhergehenden Ansprüche, **dadurch gekennzeichnet, dass** in der Abführleitung (38; 55) ein Druckschalter (46) zur Druckmessung vorgesehen ist.

10. Aufbereitungsvorrichtung nach einem der vorhergehenden Ansprüche, **dadurch gekennzeichnet, dass** in der Abführleitung (55) ein Membrandruckspeicher (56) vorgesehen ist.

11. Verfahren zur Aufbereitung einer Kühl- und Spülflüssigkeit in einer Aufbereitungsvorrichtung (2; 50), bei dem ein Steuerventil (43) bei aktiver Überdruckeinrichtung (32) geschlossen und eine Bypassleitung (41) über ein Steuerventil (44) für ein Zeitintervall geöffnet wird.
